Europäisches Patentamt

European Patent Office

Office européen des brevets

(19)

(11) EP 1 395 039 A1

(12) EUROPEAN PATENT APPLICATION
published in accordance with Art. 158(3) EPC

(43) Date of publication:
03.03.2004 Bulletin 2004/10

(51) Int Cl.$^{7}$: H04N 1/41, H04N 7/24

(21) Application number: 03745936.9

(86) International application number:
PCT/JP2003/004381

(22) Date of filing: 07.04.2003

(87) International publication number:
WO 2003/085957 (16.10.2003 Gazette 2003/42)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 05.04.2002 JP 2002103417

(71) Applicant: MATSUSHITA ELECTRIC INDUSTRIAL
CO., LTD.
Kadoma-shi, Osaka 571-8501 (JP)

(72) Inventor: IMURA, Koji
Machida-shi, Tokyo 194-0013 (JP)

(74) Representative: Grünecker, Kinkeldey,
Stockmair & Schwanhäusser Anwaltssozietät
Maximilianstrasse 58
80538 München (DE)

(54) **CODE AMOUNT CONTROL DEVICE AND CODE AMOUNT CONTROL METHOD**

(57) The present invention relates to a code amount control apparatus and code amount control method that changes a code amount of an image to a predetermined value for a short processing time. A determining section (352) compares a generated code amount output from a coding section (310) with a designated code amount and determines whether the code amount of encoded data encoded by the coding section (310) is larger than the designated code amount. A linear line deciding section (354) decides a linear line (namely, linear function) of a square of the generated code amount and a reciprocal of a parameter from a predetermined fixed point, the square of the generated code amount output from the coding section (310) and the reciprocal of the parameter output from a parameter calculating section (320) on two-dimensional coordinates. A modified parameter calculating section (356) calculates a modified parameter corresponding to the designated code amount from the decided linear line (linear function).

FIG.5

**Description**

Technical Field

The present invention relates to a code amount control apparatus and code amount control method, and particularly relates to a code amount control apparatus and code amount control method that controls a code amount generated by encoding a still image.

Background Art

Generally, a still image formed by a camera and the like has a large amount of data. Accordingly, for example, when the still image is transmitted by radio communication, the amount of data must be reduced while deterioration in an image quality is prevented as much as possible. In order to realize this, a so-called JPEG (Joint Photographic Expert Group) is employed as one of techniques that are widely used. JPEG is an International Standard (ITU-T Recommendation T.81 (1991) or ISO/IEC 10918-1 (1992)).

In the above International Standard, only a minimum algorithm for ensuring mutual connectability is defined. Accordingly, a method for controlling an image quality has not been standardized and depends on an implementor. An unofficial organization, which is called Independent JPEG Group (IJG), defines an algorithm recommended in connection with a non-standardized portion of JPEG (namely, area dependent on implementor) in such a way to supplement the International Standard.

In this algorithm, first, an image quality control factor q_factor, which is provided by a user for adjustment of image quality, is converted to a parameter qscale by the following equation (1) or (2).

[In case of q_factor > 50]

$$\text{qscale} = (2 \times 0\text{x}100) - \{(q\_factor \times 0\text{x}100) / 50\}$$

$$= 256 \times (2 - q\_factor / 50) \qquad \cdots (1)$$

[In case of q_factor $\leqq$ 50]

$$\text{qscale} = (50 \times 256) / q\_factor \qquad (2)$$

Then, the following equation (3) is performed using an obtained parameter qscale and a quantizing table value baseQ as a reference to obtain a quantizing table value Q. The value of quantizing table value Q indicates a quantizing width of image data, and when the value is large, an amount of data is small, but the image quality deteriorates.

$$Q = (\text{baseQ} \times \text{qscale} + 128) >> 8$$

$$= (\text{baseQ} \times \text{qscale}) / 256 + 1/2 \qquad \cdots (3)$$

In order to obtain a desired image quality, the user decides the above image quality control value q_factor. Then, quantizing table value Q is calculated from the decided image quality control value q_factor and coding is performed.

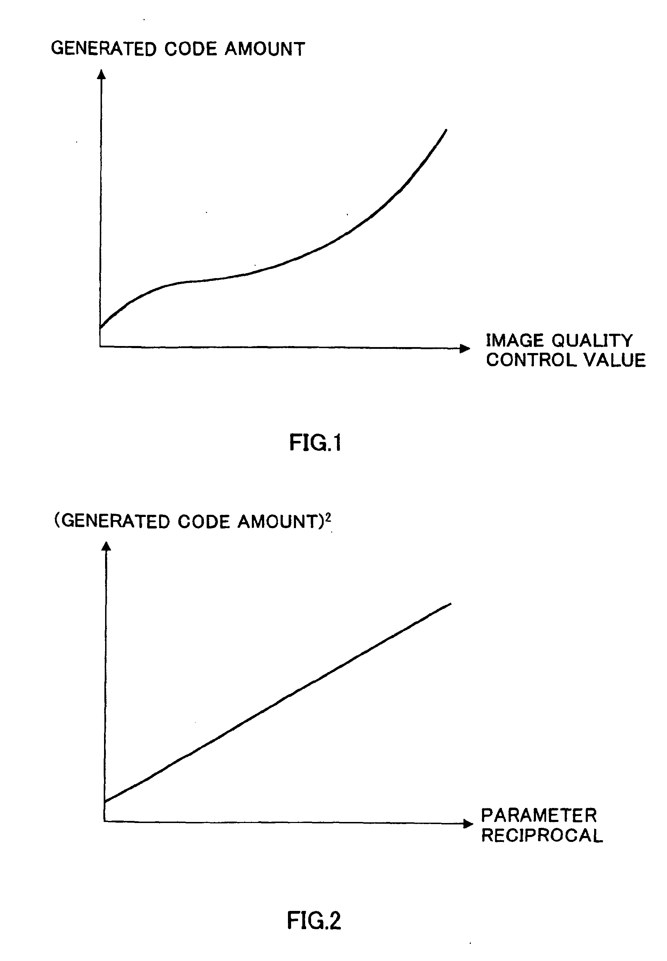

Regarding the coding, since a variable-length code, which is employed to allocate a code length according to the frequency of occurrence of each data in the image, is used, an amount of codes to be generated differs depending on an input image. More specifically, there is a tendency that an amount of generated codes of an image, which includes many portions that lack in a change in color and lightness, is small and an amount of generated codes of an image, which includes portions such as a bookshelf and a crowd that finely change in color and lightness, is large. At this time, the relationship as illustrated in FIG. 1 is established between the image quality control factor q_factor that is decided by the user and the amount of generated codes.

As mentioned above, since the amount of generated codes differs depending on the input image at the time of coding the still image, when image data formed by, for example, a small-size mobile terminal is stored in a memory medium, the user cannot know in advance the amount of data that can be recorded on the memory medium with a limited recording capacity.

For this reason, in the technique disclosed in Unexamined Japanese Patent Publication No. 5-145764, such operations that a correction factor, which is employed to correct a quantizing table according to complexity of an image in advance, is decided, the image is encoded using the quantizing table multiplied by the correction factor and a correction factor is obtained from the coding result again to perform coding again are repeated until a predetermined amount of codes is achieved. This enables to fix an amount of codes regardless of the input image.

However, the aforementioned method has a problem in which coding is repeated until a predetermined amount of codes is achieved, resulting in an increase in processing time.

Disclosure of Invention

An object of the present invention is to change an amount of codes to a predetermined amount for a short processing time.

The present inventors paid attention to the fact that there was difficulty in formulating a relationship between an image quality control factor q_factor and an amount of generated codes (see FIG. 1), but there was a linear relationship (proportionality) between a reciprocal of a parameter qscale and a square of the amount of generated codes as shown in FIG. 2. Moreover, he also paid attention to the fact that an inclination of the linear line differed when the image differed but there was a fixed point through which the linear line always passed without depending on the image. Then, he came to achieve this invention by discovering that the linear line was decided from the first coding result and the fixed point to make it possible to determine a parameter (hereinafter referred to as "modified parameter") corresponding to a desired code amount and a second coding was performed using the modified parameter to enable to obtain image data with a desired code amount.

In other words, the subject matter of the present invention is that a linear function of an amount of generated codes and a parameter is obtained based on a coding result of an input image and that a modified parameter corresponding to a desired code amount is calculated from the obtained linear function, and that the input image is encoded again using the calculated modified parameter.

According to one embodiment of the present invention, a code amount control apparatus includes coding section that encodes an input image using a parameter for controlling an image quality, and calculating section that calculates a modified parameter corresponding to a desired code amount based on a function of a code amount of encoded data obtained by coding and the parameter, wherein said coding section encodes the input image again using the modified parameter.

According to another embodiment of the present invention, a code amount control method includes the steps of encoding an input image using a parameter for controlling an image quality, calculating a modified parameter corresponding to a desired code amount based on a function of a code amount of encoded data obtained by coding and the parameter, and encoding the input image again using the modified parameter.

According to further another embodiment of the present invention, a code amount control program causes a computer to execute the steps of encoding an input image using a parameter for controlling an image quality, calculating a modified parameter corresponding to a desired code amount based on a function of a code amount of encoded data obtained by coding and the parameter, and encoding the input image again using the modified parameter.

Brief Description of Drawings

FIG. 1 is a view illustrating a relationship between an amount of generated codes and an image quality control factor;
FIG. 2 is a view illustrating a relationship between a square of the code amount of generated codes and a reciprocal of a parameter;
FIG. 3 is a block diagram illustrating a configuration of a mobile communication terminal apparatus according to Embodiment 1 of the present invention;
FIG. 4 is a block diagram illustrating a configuration of a still image coding section according to Embodiment 1;
FIG. 5 is a block diagram illustrating an configuration of a code amount controlling section according to Embodiment 1;
FIG. 6A is a view illustrating an operation of a code amount controlling section according to Embodiment 1;
FIG. 6B is a view subsequent to FIG. 6A;
FIG. 6C is a view subsequent to FIG. 6B; and
FIG. 7 is a block diagram illustrating a configuration of a code amount controlling section according to Embodiment 2 of the present invention.

Best Mode for Carrying Out the Invention

Embodiments of the present invention will be specifically described with reference to the drawings.

(Embodiment 1)

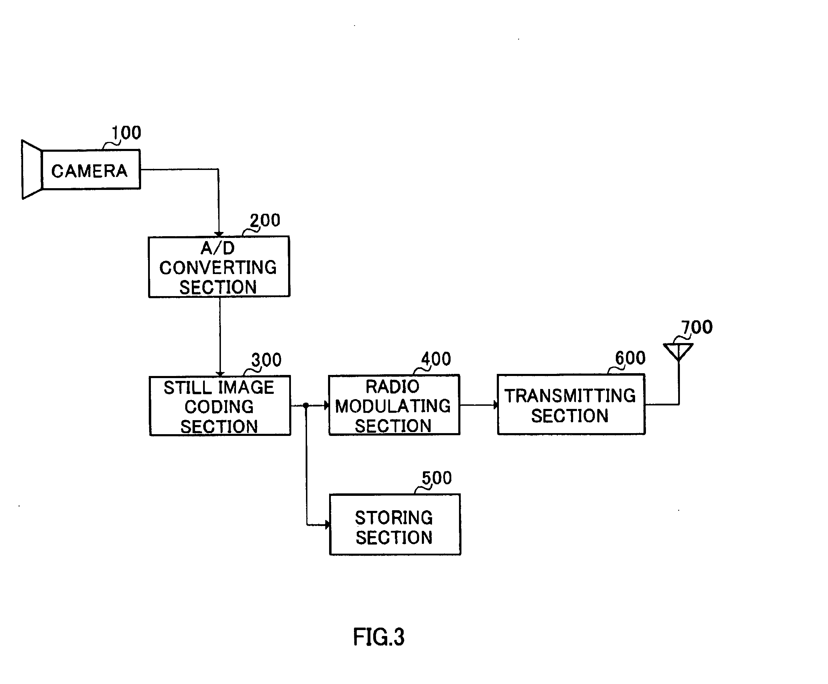

FIG. 3 is a block diagram illustrating a configuration of a mobile communication terminal apparatus according to Embodiment 1 of the present invention. The mobile communication terminal apparatus illustrated in this figure includes a camera 100, an A/D converting section 200, a still image coding section 300, a radio modulating section 400, a storing section 500, a transmitting section 600, and an antenna 700.

A still image obtained by the camera 100 is converted to a digital image by the A/D converting section 200. Then, the digital image as an input image is input to the still image coding section 300 and the input image is encoded. The encoded data is modulated by the radio modulating section 400 and the modulated data is transmitted via the antenna 700 by the transmitting section 600. In addition, the encoded data is stored in the storing section 500 when it is not transmitted.

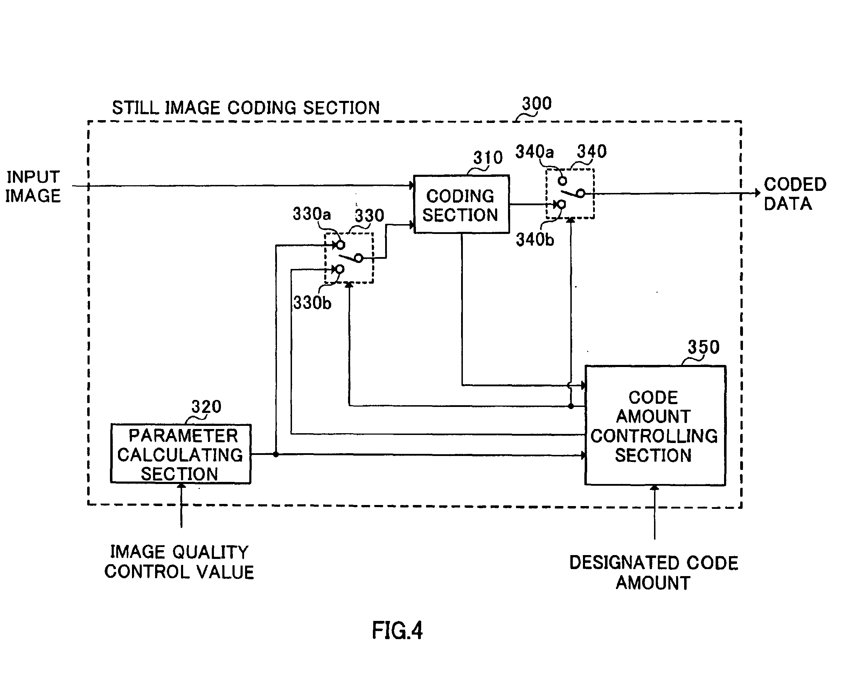

FIG. 4 is a block diagram illustrating the configuration of the still image coding section 300. The still image coding section 300 includes a coding section 310, a parameter calculating section 320, a switch 330, a switch 340, and a code amount controlling section 350.

The coding section 310 encodes an input image based on a parameter, outputs encoded data to a terminal 340b of the switch 340, and outputs a generated code amount to the code amount controlling section 350. The parameter calculating section 320 calculates a parameter used for coding from an image control value that a user sets to control an image quality, and outputs it to a terminal 330a of the switch 330 and the code amount controlling section 350. The switch 330 performs switching between the parameter output from the parameter calculating section 320 and a modified parameter output from the code amount controlling section 350 to be described later, and outputs it to the coding section 310. When the code amount of encoded data output from the coding section 310 reaches a designated code amount that is a desired code amount, the switch 340 outputs the encoded data. The code amount controlling section 350 compares the generated code amount output from the coding section 310 with the designated code amount, determines a code amount of encoded data, and outputs a determination result to the switch 330 and the switch 340. Moreover, the code amount controlling section 350 obtains a linear function of the amount of generated codes and the parameter, calculates a modified parameter for correcting the code amount of encoded data to a designated code amount, and outputs it to a terminal 330b of the switch 330.

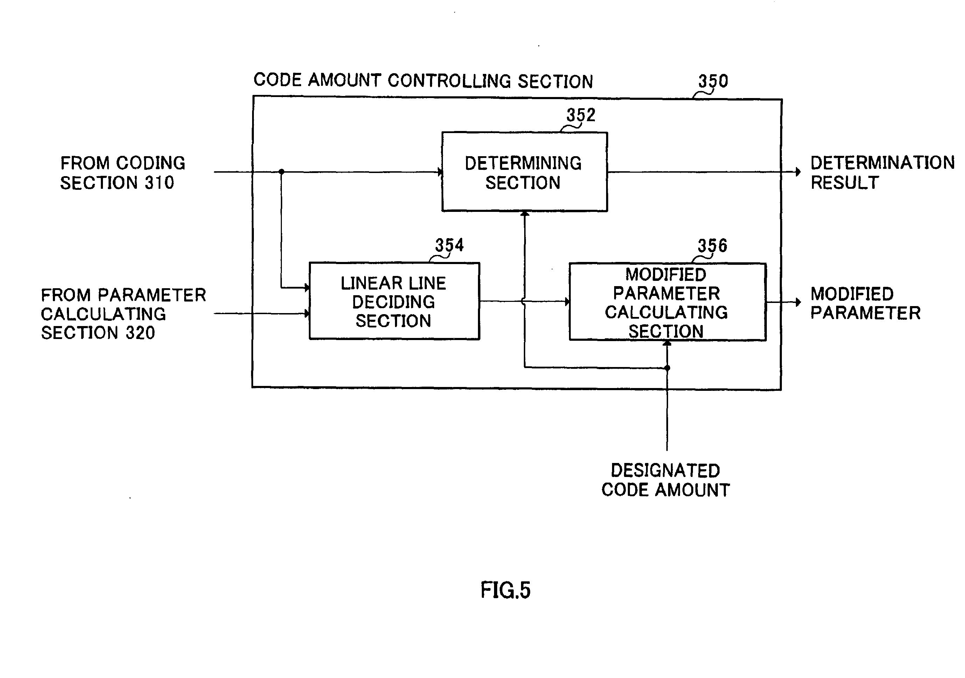

FIG. 5 is a block diagram illustrating a configuration of the code amount controlling section 350. The code amount controlling section 350 includes a determining section 352, a linear line deciding section 354, and a modified parameter calculating section 356.

The determining section 352 compares a generated code amount output from the coding section 310 with the designated code amount and determines whether a code amount of encoded data coded by the coding section 310 is larger than the designated code amount. The linear line deciding section 354 decides a linear line (namely, a linear function) of a square value of a generated code amount and a reciprocal of a parameter on two-dimensional coordinates from a predetermined fixed point, a square value of the generated code amount output from the coding section 310 and a reciprocal of a parameter output from the parameter calculating section 320. The modified parameter calculating section 356 calculates a modified parameter corresponding to the designated code amount from the decided linear line (linear function).

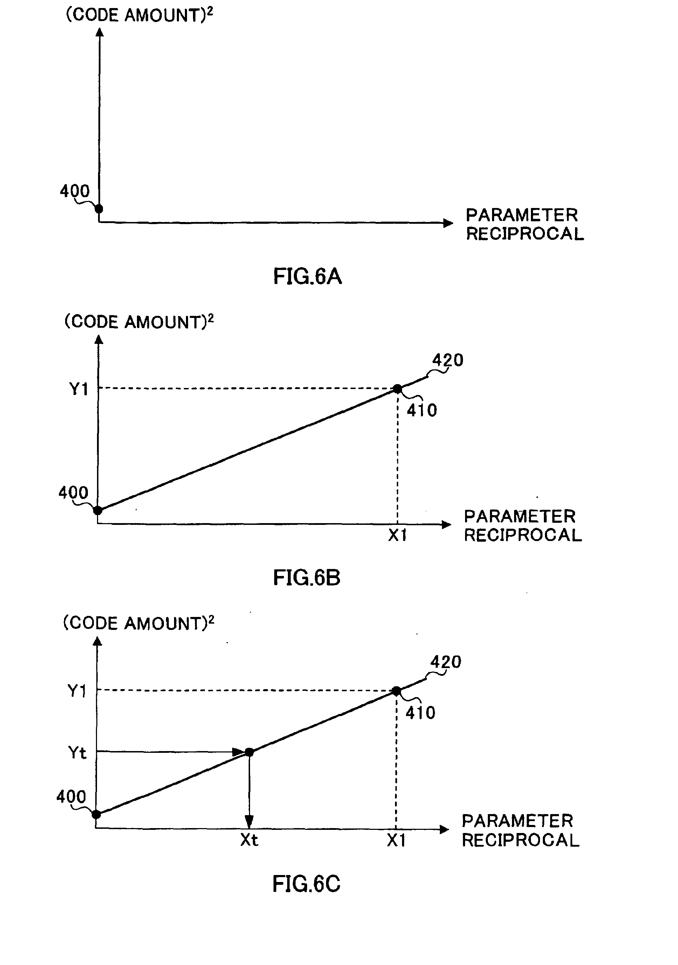

An explanation will be next given of an operation of the above-configured still image coding section 300 with reference to FIG. 6. Additionally, in an initial state, it is assumed that the switch 330 is connected to a terminal side 330a and the switch 340 is connected to a terminal side 340a.

First of all, an input image converted by the A/D converting section 200 is input to the coding section 310. Moreover, an image control value, which a user sets to control an image quality, is input to the parameter calculating section 320, and a parameter is calculated from the image control value. The calculated parameter is input to the coding section 310 via the terminal 330a of the switch 330. Then, the input image is encoded by the coding section 310 based on the parameter. Encoded data obtained by coding is output to the 340b of the switch 340. Furthermore, a code amount generated when the input image is encoded is output to the determining section 352 and the linear line deciding section 354 included in the code amount controlling section 350.

Then, the determining section 352 of the code amount controlling section 350 determines the size of large and small in connection with the generated code amount and the designated code amount, which is the desired code amount, and when the generated code amount exceeds the designated code amount as a determination result, 1, for example, is output, and when the generated code amount is the designated code amount or less, 0, for example, is output. The determination result is output to the switch 330 and the switch 340, and when 1 is output as the determination result, the switch 330 is connected to the terminal side 330b and the switch 340 stays being connected to the terminal side 340a. Accordingly, when the code amount of encoded data output from the coding section 310 exceeds the designated code amount, no encoded data is output to the radio modulating section 400 or the storing section 500.

On the other hand, when 0 is output as the determination result, the switch 330 stays being connected to the terminal side 330a and the switch 340 is connected to the terminal side 340b. Accordingly, when the code amount of encoded data output from the coding section 310 is the designated code amount or less, encoded data is output to the radio modulating section 400 or the storing section 500.

Furthermore, the parameter output from the parameter calculating section 320 is input to the linear line deciding section 354 of the code amount controlling section 350. Then, the linear line deciding section 354 connects a fixed point 400 (FIG 6A), which is predetermined in the linear line deciding section 354, to a point 410 (FIG. 6B), which is given by a reciprocal value X1 of the parameter output from the parameter calculating section 320 and a square value Y1 of the generated code amount output from the coding section 310, thereby a linear line 420 (linear function) is decided. Information on the decided linear line 420 (linear function) is output to the modified parameter calculating section 356. More specifically, an inclination of the linear line 420 and an intercept thereof are output to the modified parameter calculating section 356.

After that, the modified parameter calculating section 356 calculates a reciprocal value Xt of the modified parameter that enables to achieve a designated code amount from a square value Yt of the designated code amount using the linear line 420 (linear function) (FIG. 6C). Moreover, the modified parameter calculating section 356 calculates a modified parameter from the reciprocal value Xt of the modified parameter, and outputs the calculated modified parameter to the terminal 330b of the switch 330. Since the linear line 420 (linear function) is used in calculating the modified parameter, the modified parameter is calculated by only a simple computation.

Here, when 1 is output from the determining section 352 as a determination result, namely, the generated code amount exceeds the designated code amount, since the switch 330 is connected to the terminal side 330b, the modified parameter is input to the coding section 310. On the other hand, when 0 is output from the determining section 352 as a determination result, namely, the generated code amount is the designated code amount or less, since coded data is already output via the terminal 340b of the switch 340 and the switch 330 is connected to the terminal side 330a, the modified parameter is not input to the coding section 310.

Then, when 1 is output from the determining section 352 as the determination result, namely, the generated code amount exceeds the designated code amount, the modified parameter is input to the coding section 310 since the switch 330 is connected to the terminal side 330b. On the other hand, when the generated code amount is the designated code amount or less, the coded data is already output via the terminal 340b of the switch 340 and the switch 330 is connected to the terminal side 330a, so that the modified parameter is not input to the coding section 310.

Here, the modified parameter is used when recoding is performed by the coding section 310, and the modified parameter is fixed such that the code amount reaches the designated code amount, with the result that the code amount of encoded data obtained by recoding becomes equal to the designated code amount. Accordingly, the generated code amount is the designated code amount or less and 0 is output as the determination result done by the determining section 352. This connects the switch 340 to the terminal side 340b to output coded data with a desired code amount.

Thus, according to the mobile communication terminal apparatus of this embodiment, a linear line (linear function) of a square value of a code amount and a reciprocal of a parameter is decided, a code amount of coded data obtained by performing a first coding to an input image is compared with a desired code amount, when the code amount of encoded data exceeds the desired amount, a modified parameter corresponding to the desired code amount is calculated from the above linear line (linear function), and a second coding is performed using the calculated modified parameter, with the result that the number of recoding times, which is used to convert the input image to coded data with a desired code amount, can be reduced. Also, recoding can be performed by a simple computation to change the code amount of the image to a predetermined value for a short processing time.

Additionally, this embodiment explained the mobile communication terminal apparatus having the code amount control apparatus. However, the present invention may be implemented by software. In other words, the code amount control method of the present invention is programmed and stored on a writable storage medium such as a ROM and the like, and the stored program may be processed by a CPU. Moreover, the present invention may read the software from the storage medium and execute it by a computer.

Since the fixed point predetermined in the linear line deciding section 354 differs depending on the size of the input image, when images of various sizes are coded, the fixed point is decided for each size of the image and held as, for example, a table, thereby making it possible to control the image with an arbitrary image size to be the desired code amount or less.

(Embodiment 2)

The characteristic of Embodiment 2 of the present invention is that the fixed point used in deciding the linear line (linear function) is made variable according to image size information. As compared with the configuration of Embodiment 1 illustrated in FIGS. 3 to 5, this embodiment differs from Embodiment 1 in only the configuration of the code amount controlling section 350, and the explanation of the same configuration as that of Embodiment 1 is omitted.

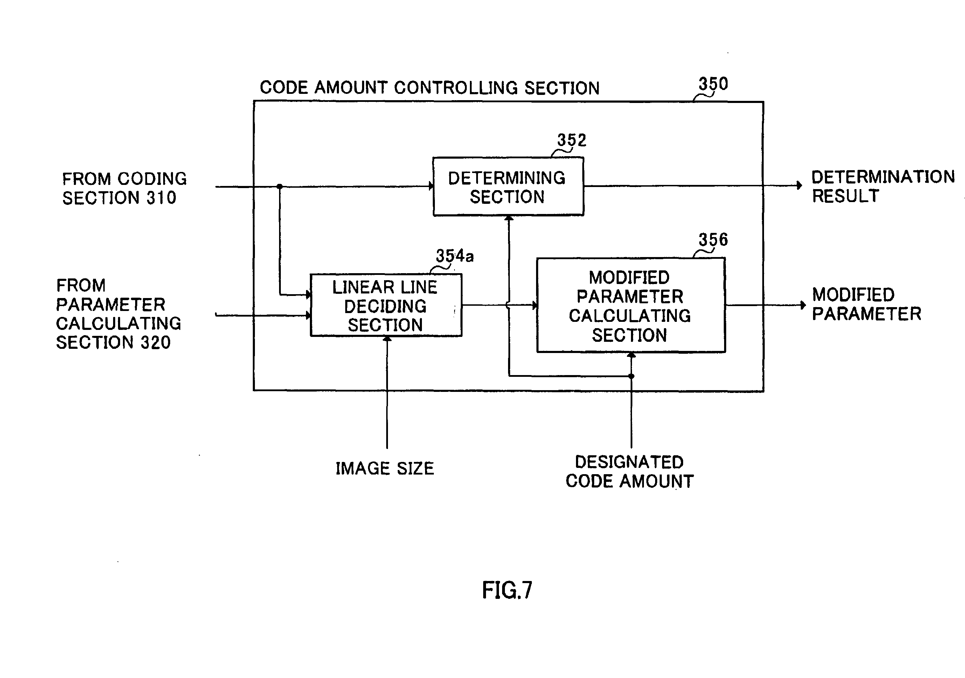

FIG. 7 is a block diagram illustrating the configuration of the code amount controlling section 350 according to this embodiment. The code amount controlling section 350 includes a determining section 352, a linear line deciding section 354a and a modified parameter calculating section 356.

The determining section 352 performs a comparison between a generated code amount output from the coding section 310 and a designated code amount and determines whether the code amount of encoded data encoded by the coding section 310 is larger than the designated code amount. The linear line deciding section 354a decides a fixed point according to the image size of the input image and fixes a linear line (linear function) of a square value of a generated code amount and a reciprocal of a parameter on two-dimensional coordinates from the decided fixed point, the square value of the generated code amount output from the coding section 310 and the reciprocal of the parameter output from the parameter calculating section 320. The modified parameter calculating section 356 calculates a modified parameter corresponding to a designated code amount from the decided linear line (linear function).

Since the linear line deciding section 354a changes the position of fixed point 400 shown in FIG. 4 according to the image size of the input image, an image having a different image size is recoded to make it possible to change the code amount to a predetermined value.

Thus, according to this embodiment, since the fixed point, which is used to decide the linear line (linear function), is changed according to the image size, even if the image with a different image size is input as an input image, the number of recoding times, which is used to convert the input image to encoded data with a desired code amount, can be reduced and recoding can be performed by a simple computation to change the code amount of the image to a predetermined value for a short processing time.

Additionally, each of the aforementioned embodiments gave the explanation on the assumption that the recoding of input image was performed one time by the coding section 310. However, according to the configuration of each embodiment, recoding may be repeatedly performed by the determination result of the determining section 352 and the operations of the switch 330 and the switch 340. In other words, even if encoded data with a desired code amount cannot be obtained by the first recoding, the modified parameter is calculated as explained in each of embodiments and recoding is further performed to obtain encoded data with a desired code.

Furthermore, each of the aforementioned embodiments explained the case in which the present invention was used in the mobile communication terminal apparatus. However, the present invention may be applicable without being limited to this if the apparatus is one that encodes a digital image and controls a code amount to, for example, compress a data amount. Moreover, particularly in the mobile communication terminal apparatus, there is difficulty in executing a large amount of computation by a high-performance processor since the cost and the capacity of battery are limited. Accordingly, it is extremely useful to apply the present invention to perform a code amount control by only a simple computation.

As explained above, according to the present invention, the code amount of an image can be changed to a predetermined value for a short processing time.

This application is based on the Japanese Patent Application No. 2002-103417 filed on April 5, 2002, entire content of which is expressly incorporated by reference herein.

Industrial Applicability

The present invention relates to a code amount control apparatus and code amount control method, and particularly relates to a code amount control apparatus and code amount control method that controls a code amount generated by encoding a still image.

**Claims**

1. A code amount control apparatus comprising:

   coding section that encodes an input image using a parameter for controlling an image quality; and
   calculating section that calculates a modified parameter corresponding to a desired code amount based on a function of a code amount of encoded data obtained by coding and the parameter,

wherein said coding section encodes the input image again using the modified parameter.

2. The code amount control apparatus according to claim 1, wherein said calculating section includes:

a linear line deciding section that decides a linear line by connecting a point, which corresponds to the parameter and the code amount generated when an input image is encoded using the parameter, to a predetermined fixed point on two-dimensional coordinates having a reciprocal of the parameter and a square of the code amount as axes; and
a modified parameter calculating section that calculates a modified parameter corresponding to a desired code amount using the decided linear line.

3. The code amount control apparatus according to claim 2, wherein said linear line deciding section sets the fixed point according to an image size of the input image.

4. The code amount control apparatus according to claim 1, wherein said calculating section includes determining section that determines which of the code amount of encoded data and the desired code amount is larger or smaller, wherein said coding section encodes the input image again when the code amount of encoded data is larger than the desired code amount as a determination result of said determining section.

5. A mobile communication terminal apparatus having the code amount control apparatus described in claim 1.

6. A code amount control method including the steps of:

encoding an input image using a parameter for controlling an image quality;
calculating a modified parameter corresponding to a desired code amount based on a function of a code amount of encoded data obtained by coding and the parameter; and
encoding the input image again using the modified parameter.

7. A code amount control program causing a computer to execute the steps of:

encoding an input image using a parameter for controlling an image quality;
calculating a modified parameter corresponding to a desired code amount based on a function of a code amount of encoded data obtained by coding and the parameter; and
encoding the input image again using the modified parameter.

GENERATED CODE AMOUNT

IMAGE QUALITY
CONTROL VALUE

**FIG.1**

$(\text{GENERATED CODE AMOUNT})^2$

PARAMETER
RECIPROCAL

**FIG.2**

FIG.3

FIG.4

CODE AMOUNT CONTROLLING SECTION          350

352

FROM CODING
SECTION 310  →  DETERMINING
              SECTION         →  DETERMINATION
                                 RESULT

354                              356

FROM PARAMETER
CALCULATING  →  LINEAR LINE
SECTION 320     DECIDING    →    MODIFIED
                SECTION          PARAMETER    →  MODIFIED
                                 CALCULATING     PARAMETER
                                 SECTION

DESIGNATED
CODE AMOUNT

FIG.5

EP 1 395 039 A1

(CODE AMOUNT)$^2$

400

PARAMETER
RECIPROCAL

FIG.6A

(CODE AMOUNT)$^2$

420

Y1

410

400

X1

PARAMETER
RECIPROCAL

FIG.6B

(CODE AMOUNT)$^2$

420

Y1

410

Yt

400

Xt          X1

PARAMETER
RECIPROCAL

FIG.6C

EP 1 395 039 A1

CODE AMOUNT CONTROLLING SECTION — 350

DETERMINING SECTION — 352

FROM CODING SECTION 310 → DETERMINATION RESULT

FROM PARAMETER CALCULATING SECTION 320

LINEAR LINE DECIDING SECTION — 354a

MODIFIED PARAMETER CALCULATING SECTION — 356 → MODIFIED PARAMETER

IMAGE SIZE

DESIGNATED CODE AMOUNT

FIG.7

**EP 1 395 039 A1**

# INTERNATIONAL SEARCH REPORT

| International application No. |
|---|
| PCT/JP03/04381 |

| A. CLASSIFICATION OF SUBJECT MATTER |
|---|
| Int.Cl$^7$  H04N1/41, H04N7/24 |

According to International Patent Classification (IPC) or to both national classification and IPC

| B. FIELDS SEARCHED |
|---|
| Minimum documentation searched (classification system followed by classification symbols) |
| Int.Cl$^7$  H04N1/41, H04N7/24 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | JP 10-341435 A  (Mitsubishi Electric Corp.),<br>22 December, 1998 (22.12.98),<br>& EP 871333 A        & CN 1195943 A<br>& US 6052488 A        & KR 264710 A | 1,5–7<br>4 |
| X<br>Y | JP 10-327404 A  (Eastman Kodak Co.),<br>08 December, 1998 (08.12.98),<br>& EP 874520 A          & US 5974182 A | 1,4,6–7<br>5 |
| A | JP 7-183817 A  (Nippon Columbia Co., Ltd.),<br>21 July, 1995 (21.07.95),<br>Page 4, left column, line 19<br>(Family: none) | 2–3 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 May, 2003 (02.05.03) | 20 May, 2003 (20.05.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

14

## INTERNATIONAL SEARCH REPORT

| International application No. |
| --- |
| PCT/JP03/04381 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 7-264582 A (Matsushita Electric Industrial Co., Ltd.), 13 October, 1995 (13.10.95), Page 7, right column, line 27 to page 8, left column, line 9; Fig. 3 & US 5781237 A | 2-3 |
| A | JP 10-23413 A (Fuji Xerox Co., Ltd.), 23 January, 1998 (23.01.98), Page 5, left column, line 26 to page 5, right column, line 12; Fig. 9 (Family: none) | 2-3 |

Form PCT/ISA/210 (continuation of second sheet) (July 1998)